# EUROPEAN PATENT SPECIFICATION

(11) **EP 2 130 850 B1**
(45) Date of publication and mention of the grant of the patent: **26.01.2011**
(21) Application number: 09251465.2
(22) Date of filing: 02.06.2009
(51) Int. Cl.: C08G 65/00

(54) **Curable fluoropolyether coating compositions**
Härtbare Fluoropolyether-Beschichtungszusammensetzungen
Compositions de revêtement de fluoropolyéther durcissable

(30) Priority: 02.06.2008 JP 2008144320
(43) Date of publication of application: 09.12.2009
(73) Proprietor: Shin-Etsu Chemical Co., Ltd., Tokyo (JP)
(72) Inventor: Sato, Shinichi, Annaka-shi, Gunma-ken (JP)
(74) Representative: Stoner, Gerard Patrick

(56) References cited:
- EP-A- 0 745 604
- EP-A- 0 765 916
- US-A- 5 288 889
- US-A1- 2005 288 474

## Description

This invention relates to curable fluoropolyether coating compositions and in particular to such compositions which are adherent to silicone rubber and cure into products having solvent resistance, chemical resistance, weather resistance, water repellency, oil repellency, heat resistance and low moisture permeability.

### BACKGROUND

Over decades, fluorinated organic compounds have been used in a variety of fields. For example, Japanese Patent No. 3,121,245 discloses a method for preparing a fluorinated organosilicon compound having perfluoroalkylene radicals or divalent perfluoropolyether radicals and terminated with hydrolyzable radicals, and a room temperature curable composition comprising the same. The composition is useful as a moisture-proof coating agent because of its heat resistance, chemical resistance, solvent resistance, water repellency, oil repellency, and weather resistance, as well as low gas permeability. The composition, however, is not adherent to silicone rubber or the like.

Also US-A-7,081,508 (JP-A 2004-331704) discloses a primer composition comprising, as essential components, (a) a fluoroalkylene or fluoropolyether compound having at least one alkenyl radical and at least one hydrolyzable silyl radical in the molecule, (b) an organic titanate, (c) an organic tin compound, and (d) a silane compound. The composition is advantageously used as a primer for many heat-curable elastomer compositions, typically a heat-curable elastomer composition composed mainly of a polymer having at least two alkenyl radicals in the molecule and a perfluoropolyether structure in the backbone, for the purpose of enhancing the adhesion of the elastomer composition to various substrates of inorganic materials such as metals, glass, ceramics, cement, and mortar, carbon, and organic materials such as plastics. Regrettably, this composition is not adherent to silicone rubber.

There is thus a strong need for a fluorinated organic compound-containing room temperature curable composition which is coated to a surface of silicone rubber for modifying the surface and imparting barrier properties against chemicals and solvents.

### Citation List

Patent document 1: JP 3121245
Patent document 2: US-A-7,081,508 (JP-A 2004-331704)

An object herein is to provide new and useful curable fluoropolyether coating compositions, methods of making and using them and products comprising the cured composition. Preferred aims include full adherence to silicone rubber, and curability to products having excellent solvent resistance, chemical resistance, weather resistance, water repellency, oil repellency, heat resistance and low moisture permeability.

The inventor has found that a curable fluoropolyether coating composition can be prepared by adding (B) an amino-containing carbon-functional silane and (C) an epoxy-containing carbon-functional silane as adhesive aids and (D) a curing catalyst to (A) a linear fluoropolyether compound having at least two isopropenoxysilyl radicals in the molecule and a perfluoropolyether structure in the backbone and that the composition is fully adherent to silicone rubber and cures into a product having excellent solvent resistance, chemical resistance, weather resistance, water repellency, oil repellency, heat resistance, and low moisture permeability.

Accordingly, the present invention provides a curable fluoropolyether coating composition as defined in claim 1 comprising (A) a linear fluoropolyether compound having at least two isopropenoxysilyl radicals in the molecule and a perfluoropolyether structure in the backbone, (B) a carbon-functional silane having an amino radical which is selected from the options in claim 1, (C) a carbon-functional silane having an epoxy radical which is selected from the options in claim 1, and (D) a curing catalyst.

In a preferred embodiment, component (A) is a linear fluoropolyether compound having the general formula (1): 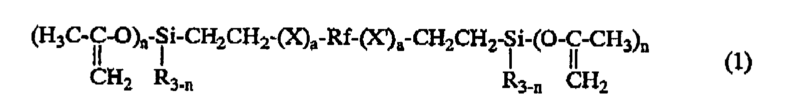 wherein X is -CH₂-, -CH₂O-, -CH₂OCH₂- or -Y-NR-CO- wherein Y is -CH₂- or an o-, m- or p-dimethylsilylphenylene radical of the structural formula (Z): 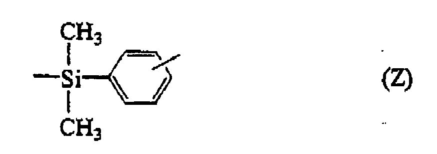 and R¹ is hydrogen or a substituted or unsubstituted monovalent hydrocarbon radical, X' is -CH₂- -OCH₂-, -CH₂OCH₂-or -CO-NR¹-Y'- wherein Y' is -CH₂- or an o-, m- or p-dimethylsilylphenylene radical of the structural formula (Z'): 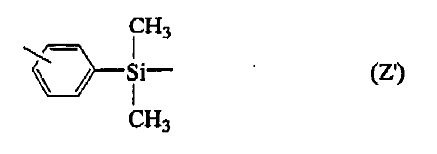 and R¹ and R are as defined above, Rf is a divalent perfluoropolyether radical, a is independently 0 or 1, and n is 2 or 3.

In a preferred embodiment, curing catalyst (D) is selected from organic tin compounds, titanates, guanidyl-containing compounds, and DBU derivatives.

Typically, the composition is used for sealing or coating, and these uses and the corresponding coated or sealed products are aspects of the invention.

### ADVANTAGEOUS EFFECTS

The curable fluoropolyether coating composition is fully adherent to silicone rubber. The cured composition exhibits excellent properties of solvent resistance, chemical resistance, weather resistance, water repellency, oil repellency, and heat resistance, as well as low moisture permeability.

### FURTHER EXPLANATIONS; OPTIONS AND PREFERENCES

The singular forms "a," "an" and "the" include plural referents unless the context clearly dictates otherwise.

An amount of a certain component added is generally expressed in parts by weight, and per 100 parts by weight (total) of component (A) unless otherwise stated.

### Component (A)

Component (A) is a base polymer of the curable fluoropolyether coating composition. It is a linear fluoropolyether compound having at least two isopropenoxysilyl radicals in the molecule and a perfluoropolyether structure in the backbone.

The perfluoropolyether structure contains numerous recurring units -C_{g}F_{2g}O- wherein g is independently an integer of 1 to 6, and typically has the general formula: (C_{g}F_{2g}O)_{f} wherein f is an integer of 20 to 600, preferably 30 to 400, and more preferably 30 to 200.

Examples of the recurring units -C_{g}F_{2g}O- are shown below. It is understood that the perfluoropolyether structure may consist of recurring units of one type or recurring units of two or more types.
-CF₂O-, -CF₂CF₂O-. -CF₂CF₂CF₂O-.
-CF(CF₃)CF₂O-, -CF₂CF₂CF₂CF₂O-.
-CF₂CF₂CF₂CF₂CF₂CF₂O-, and -C(CF₃)₂O-.

Of these, -CF₂O-, -CF₂CF₂O-, -CF₂CF₂CF₂O-, and -CF(CF₃)CF₂O- are preferred.

Isopropenoxysilyl radicals are reactive with water to form siloxane bonds (-Si-O-Si-). These radicals may be bonded to the end(s) of perfluoropolyether structure backbone of the compound. They may be bonded to the backbone directly or through divalent linking radicals, e.g. -CH₂-, -CH₂O- or -Y-NR-CO- wherein Y is -CH₂- or a radical of the formula: 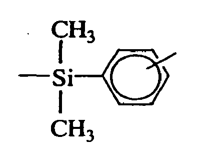 (inclusive of o-, m- and p-positions) and R is hydrogen, methyl, phenyl or allyl.

Herein the linear fluoropolyether compound should have at least 2, preferably 2 to 6, and more preferably 2 to 4 isopropenoxysilyl radicals in the molecule. Undesirably, a compound with less than 2 isopropenoxysilyl radicals may be less curable whereas a compound with more than 6 isopropenoxysilyl radicals may be less adherent to silicone rubber.

Typical of component (A) are linear fluoropolyether compounds having the general formula (1). 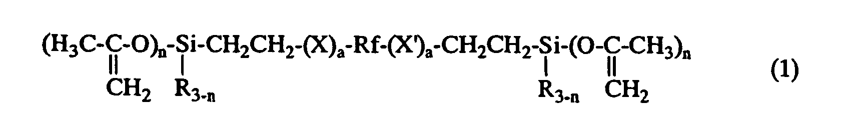 Herein X is -CH₂-, -CH₂O-, -CH₂OCH₂- or -Y-NR-CO- wherein Y is -CH₂- or an o-, m- or p-dimethylsilylphenylene radical of the structural formula (Z): 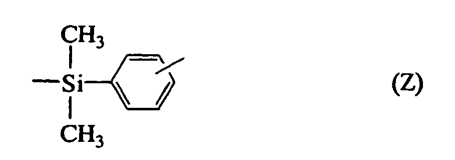 and R¹ is hydrogen or a substituted or unsubstituted monovalent hydrocarbon radical, X' is -CH₂-, -OCH₂-, -CH₂OCH₂-or -CO-NR¹-Y'- wherein Y' is -CH₂- or an o, m- or p-dimethylsilylphenylene radical of the structural formula (Z'): 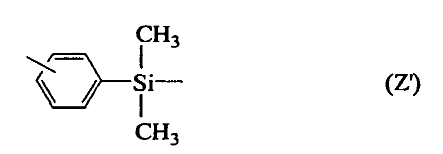 and R¹ and R are as defined above, a is independently 0 or 1, and n is 2 or 3.

In formula (1), Rf is preferably selected from structures of the general formulae (i) and (ii).

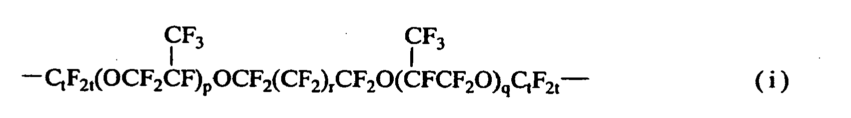

Herein p and q each are an integer of 1 to 150, p+q is 2 to 200, r is an integer of 0 to 6, and t is 2 or 3.

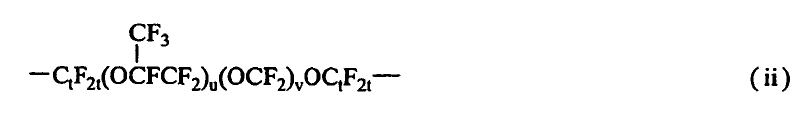

Herein u is an integer of 1 to 200, v is an integer of 1 to 50, and t is as defined above.

Preferred component (A) includes linear fluoropolyether compounds of the general formula (2). 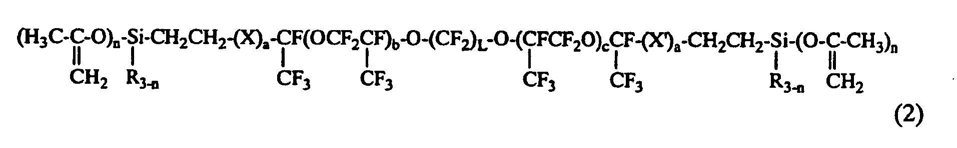 Herein X is -CH₂-, -CH₂O-, -CH₂OCH₂- or -Y-NR-CO- wherein Y is -CH₂- or a radical of the structural formula (Z): 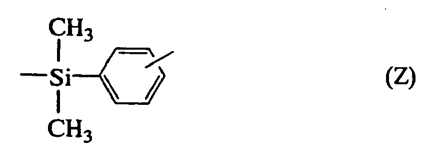 (inclusive of o-, m- and p-positions) and R¹ is hydrogen, methyl, phenyl or allyl, X' is -CH₂-, -OCH₂-, -CH₂OCH₂-or -CO-NR¹-Y'- wherein Y' is -CH₂- or a radical of the structural formula (Z'): 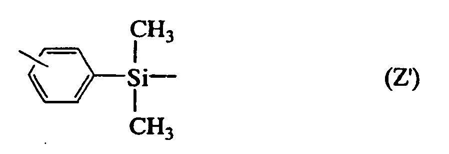 (inclusive of o-, m- and p-positions) and R¹ and R are as defined above, a is independently 0 or 1, L is an integer of 2 to 6, b and c are each independently an integer of 0 to 200, and n is 2 or 3.

Illustrative examples of the linear fluoropolyether compound of formula (2) are given below.

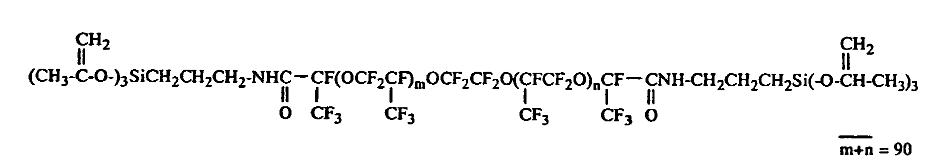

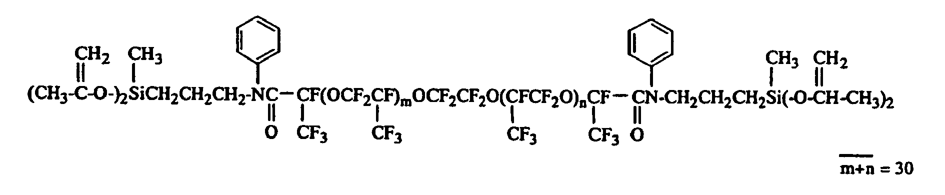

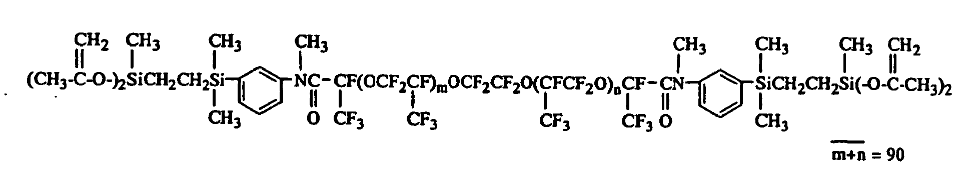

Component (A) should desirably have a viscosity of 500 to 100,000 mPa-s at 25°C as measured by a rotational viscometer and a weight average molecular weight (Mw) of 5,000 to 100,000 as measured by gel permeation chromatography (GPC) versus polystyrene standards. With a viscosity of less than 500 mPa-s, undesirably a cured film may have insufficient elongation to follow the elasticity of silicone rubber. Also undesirably, a viscosity of more than 1,000,000 mPa-s may render the composition too viscous. Similarly, a Mw of less than 5,000 may lead to a cured film which fails to follow the elasticity of silicone rubber whereas a Mw in excess of 100,000 may render the composition too viscous.

### Component (B)

Component (B) is an amino-containing carbon-functional silane, which enhances the adhesion of the composition. Component (B) is selected from γ-aminopropyltrimethoxysilane,
γ-aminopropyltrietrioxysilane,
γ-aminopropylmethyldimethoxysilane,
γ-ethylenediaminopropyltrimethoxysilane,
γ**-**ethylenediaminopropyltriethoxysilane, and
ethylenediaminobenzylethyltrimethoxysilane. Of these, γ-ethylenediaminopropyltrimethoxysilane is preferred.

Component (B) is usually compounded in an amount of preferably 0.1 to 5.0 parts by weight, more preferably 0.5 to 3.0 parts by weight per 100 parts by weight of component (A). Undesirably, less than 0.1 part of adhesion promoter (B) may achieve insufficient adhesion whereas more than 5.0 parts by weight may adversely affect curability.

### Component (C)

Component (C) is an epoxy-containing carbon-functional silane which cooperates with component (B) to enhance the adhesion of the composition.

Component (C) is selected from γ-glycidoxypropyltrimethoxysilane, γ-glycidoxypropyltriethoxysilane,
γ-glycidoxypropylmethyldimethoxysilane, and
β-(3,4-epoxycyclohexyl)ethyltrimethoxysilane. Of these,
γ-glycidoxypropyltrimethoxysilane is preferred.

Component (C) is usually compounded in an amount of preferably 0.1 to 5.0 parts by weight, more preferably 0.5 to 3.0 parts by weight per 100 parts by weight of component (A). Undesirably, less than 0.1 part of adhesion promoter (C) may achieve insufficient adhesion whereas more than 5.0 parts by weight may adversely affect curability.

Since the combined use of the amino-containing carbon-functional silane (B) and the epoxy-containing carbon-functional silane (C) enhances adhesion to silicone rubber, it is essential to add these two carbon-functional silanes, which typically carry hydrolyzable organoxy/alkoxy groups. The compounding ratio of component (B) to component (C) is preferably between 0.1/1.0 and 1.0/0.1, more preferably between 0.3/1.0 and 1.0/0.3, though not limited thereto. The amount of components (B) and (C) combined is preferably 0.3 to 3.0 parts by weight per 100 parts by weight of component (A). If the ratio of (B)/(C) is less than 0.1/1.0 or more than 1.0/0.1, adhesion may be insufficient. If the amount of components (B) and (C) combined is less than 0.3 part by weight per 100 parts by weight of component (A), adhesion may become insufficient. More than 3.0 parts by weight of components (B) and (C) combined may adversely affect curability. Carbon-functional (organo-functional) silanes other than components (B) and (C) may be further added as long as this does not compromise the effectiveness of the composition.

### Component (D)

Component (D) is a curing catalyst which can promote condensation reaction of an isopropenoxysilyl radical in component (A) with a silanol group formed by reaction of an isopropenoxysilyl radical and water. Illustrative catalysts include organic tin compounds, zirconium compounds, titanates, guanidyl-containing compounds, and DBU (1,8-diazabicyclo[5.4.0]-7-undecene) derivatives. Of these, organic tin compounds, titanates, guanidyl-containing compounds, and DBU derivatives are preferred.

Examples of the organic tin compound include dibutyltin derivatives such as dibutyltin dimethoxide, dibutyltin dioctoate and dibutyltin dilaurate, and dioctyltin derivatives such as dioctyltin dilaurate. Exemplary titanates include tetramethyl titanate, tetraisopropyl titanate, and tetrabutyl titanate. Exemplary guanidyl-containing compounds include tetramethylguanidine and tetramethylguanidylpropyltrimethoxysilane. Examples of the DBU derivatives include 1,5-diazabicyclo[5.4.0]undec-5-ene and 1,5-diazabicyclo[4.3.0]non-5-ene (DBN).

Component (D) may be compounded in a catalytic amount, and preferably in an amount of 0.01 to 1.0 part by weight, more preferably 0.1 to 0.5 part by weight per 100 parts by weight of component (A). Less than 0.01 part by weight of component (D) may achieve insufficient cure whereas more than 1.0 part by weight may provide undesirably high a curing speed.

### Other components

In addition to components (A) to (D), various fillers may be added to the composition, if necessary.

Fillers are generally added for the purposes of improving mechanical strength, thermal stability, weather resistance, chemical resistance or flame retardancy, or reducing thermal shrinkage upon curing, or decreasing the thermal expansion or gas permeability of cured elastomer. Herein fillers are added for the main purpose of improving mechanical strength.

Examples of the filler include fumed silica, wet silica, ground silica, calcium carbonate, diatomaceous earth, carbon black, and various powdered metal oxides, which may optionally be treated with various surface treating agents. Inter alia, fumed silica is preferred for improved mechanical strength. Fumed silica treated with silane surface treating agents is more preferred for improved dispersion.

The filler is preferably added in an amount of 1 to 200 parts by weight, more preferably 10 to 60 parts by weight per 100 parts by weight of component (A). Less than 1 part by weight of the filler may be less effective to mechanical strength or the like. Adding more than 200 parts by weight of the filler is meaningless because no further effect may be exerted on mechanical strength or the like.

If necessary, suitable pigments, dyes or the like may be compounded in the curable fluoropolyether rubber composition. Various other ingredients may also be added as long as the objects of the invention are not compromised.

The process for producing the curable fluoropolyether coating composition is not particularly limited. The composition may generally be prepared by mixing the above components on a well-known mixer.

This composition may be stored and used as a solution diluted with a non-aqueous organic solvent depending on the intended application. Such organic solvent solution is advantageously used in forming a cured thin film. The organic solvents used herein are preferably fluorinated organic solvents such as trifluorobenzene and m-xylene hexafluoride. These solvents may be used alone or in admixture of two or more.

The composition may be coated onto any substrate using well-known techniques such as brush coating, spray coating, wire bar coating, blade coating, roll coating, and dipping. The resulting coating has a thickness of preferably 1 to 1,000 µm, more preferably 10 to 500 µm.

Typical substrates to be coated with the composition are of silicone rubbers such as addition-crosslinking silicone rubber and peroxide-crosslinking silicone rubber. For example, silicone rubbers commercially available as KE series from Shin-Etsu Chemical Co., Ltd. may be used, but the substrates are not limited thereto.

After the composition is coated on the substrate, it may be readily cured usually by allowing it to stand in air at about 10°C to about 30°C for about 15 to about 60 minutes for reaction with airborne moisture.

The curable fluoropolyether coating compositions described above are fully adherent to silicone rubber and other substrates and cure into products having excellent properties including solvent resistance, chemical resistance, weather resistance, water repellency, oil repellency, heat resistance, and low moisture permeability. Thus the compositions find use in a variety of applications, specifically as protective materials and modifier coating materials on various rubber materials such as silicone rubber; moisture-proof coating agents and conformal coating agents for electric and electronic circuits; sealants for LCD; protective coating agents on organic EL electrodes; coating materials for LED; optical adhesives; coating agents and sealants for fuel cells; sealants for low boiling point solvent-containing parts; and moisture-proof coating agents for water supply and drain pipes.

### EXAMPLE

Examples of the invention are given below by way of illustration and not by way of limitation. In Examples, all parts are by weight.

### Example 1

Under dry nitrogen, 100 parts of a polymer (viscosity 24,500 mPa-s, average molecular weight 16,000) of the formula shown below, 2.0 parts of γ-ethylenediaminopropyltrimethoxysilane, 2.0 parts of γ-glycidoxypropyltrimethoxysilane, 0.5 part of tetramethylguanidinopropyltrimethoxysilane, 160 parts of m-xylene hexafluoride, and 40 parts of ethyl nonafluoroisobutyl ether were mixed, yielding composition I as a viscous liquid.

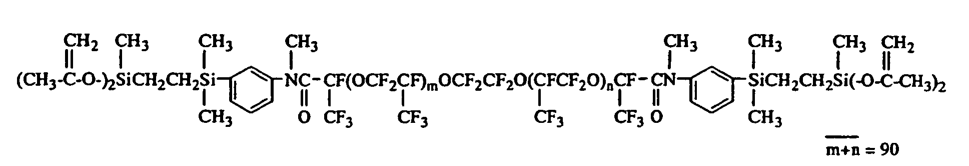

Viscous liquid composition I was brush coated to silicone rubber (KE-1950, Shin-Etsu Chemical Co., Ltd.) and cured at 23°C and 55% RH. After the sample was allowed to stand for 3 days, it was examined by rubbing whether or not the coating layer was peeled. Good adhesion was confirmed.

Similar adhesion tests were performed on different substrates, finding good adhesion. The results are shown in Table 1. Note that the result of an adhesion test is represented by symbol "O" for good adhesion or "×" when peeled.

**Table 1**

| Substrate | Silicone rubber* | Glass | Aluminum | Iron | Stainless steel | Copper | Glass-reinforced epoxy |
|---|---|---|---|---|---|---|---|
| Adhesion | O | O | O | O | O | O | O |

| | | | | | | | |
|---|---|---|---|---|---|---|---|
| * Silicone rubber KE-1950, Shin-Etsu Chemical Co., Ltd. | | | | | | | |

### Examples 2 to 4 and Comparative Examples 1 to 2

Viscous liquid compositions II to VI were prepared by the same procedure as in Example 1 except that the amounts of γ-ethylenediaminopropyltrimethoxysilane and γ-glycidoxypropyltrimethoxysilane added were changed as shown in Table 2.

The adhesion of viscous liquid compositions II to VI to silicone rubber was examined by the same test as in Example 1, with the results shown in Table 2.

**Table 2**

| | Example 2 | Example 3 | Comparative Example 1 | Example 4 | Comparative Example 2 |
|---|---|---|---|---|---|
| Composition | II | III | IV | V | VI |
| Amount of γ-ethylenediamino-propyltrimethoxy-silane, pbw | 2.0 | 2.0 | 2.0 | 1.0 | 0.0 |
| Amount of γ-glycidoxypropyl-trimethoxysilane, pbw | 1.0 | 3.0 | 0.0 | 2.0 | 2.0 |
| Adhesion to silicone rubber* | O | O | × | O | × |

| | | | | | |
|---|---|---|---|---|---|
| * Silicone rubber KE-1950, Shin-Etsu Chemical Co., Ltd. | | | | | |

### Example 5

A viscous liquid Composition VII was prepared by the same procedure as in Example 1 except that 2.0 parts of γ-aminopropyltrimethoxysilane was used instead of 2.0 parts of γ-ethylenediaminopropyltrimethoxysilane in Example 1.

The adhesion of viscous liquid composition VII to different substrates was examined by the same test as in Example 1, with the results shown in Table 3.

### Example 6

A viscous liquid composition VIII was prepared by the same procedure as in Example 1 except that 2.0 parts of β-(3,4-epoxycyclohexyl)ethyltrimethoxysilane was used instead of 2.0 parts of γ-glycidoxypropyltrimethoxysilane in Example 1.

The adhesion of viscous liquid composition VIII to different substrates was examined by the same test as in Example 1, with the results shown in Table 3.

### Example 7

A viscous liquid composition IX was prepared by the same procedure as in Example 1 except that 0.3 part of dilauryltin octoate was used instead of 0.5 part of tetramethylguanidinopropyltrimethoxysilane in Example 1.

The adhesion of viscous liquid composition IX to different substrates was examined by the same test as in Example 1, with the results shown in Table 3.

The cured compositions VII to IX were also measured for moisture permeability by the cup method according to JIS Z-0208.

**Table 3**

| | | Example | | |
|---|---|---|---|---|
| | | 5 | 6 | 7 |
| Composition | | VII | VIII | IX |
| Adhesion | Glass | O | O | O |
| | Aluminum | O | O | O |
| | Iron | O | O | O |
| | Stainless steel | × | × | O |
| | Copper | × | × | O |
| | Glass-reinforced epoxy | O | O | O |
| | Silicone rubber* | O | O | O |
| Moisture permeability, g/m²-24h | | 8 | 9 | 9 |

| | | | | |
|---|---|---|---|---|
| * Silicone rubber KE-1950, Shin-Etsu Chemical Co., Ltd. | | | | |

## Claims

1. A curable fluoropolyether coating composition comprising
(A) a linear fluoropolyether compound having at least two isopropenoxysilyl radicals in the molecule and a perfluoropolyether structure in the backbone,
(B) a carbon-functional silane having an amino radical, which is selected from
γ-aminopropyltrimethoxysilane, γ-aminopropyltriethoxysilane, γ**-**aminopropylmethyldimethoxysilane, γ-ethylenediaminopropyltrimethoxysilane, γ-ethylenediaminopropyltriethoxysilane and ethylenediaminobenzylethyltrimethoxysilane
(C) a carbon-functional silane having an epoxy radical, which is selected from
γ-glycidoxypropyltrimethoxyeiiane, γ-glycidoxypropyltriethoxysilane, γ-glycidoxypropylmethyldimethoxysilane and β-(3,4-epoxycyclohexyl)ethyltrimethoxyailane and
(D) a curing catalyst.

2. A composition of claim 1, wherein component (A) has 2 to 4 isopropenoxysllyl radicals in the molecule.

3. The composition of claim 1, wherein component (A) is a linear fluoropolyether compound having the general formula (1): 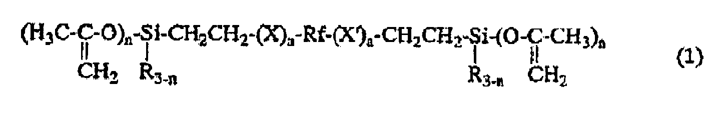 wherein X is -CH₂-, -CH₂O-, -CH₂OCH₂- or -Y-NR-CO- wherein Y is -CH₂- or an o-, m- or p-dimethylsilylphenylene radical of the structural formula (Z): 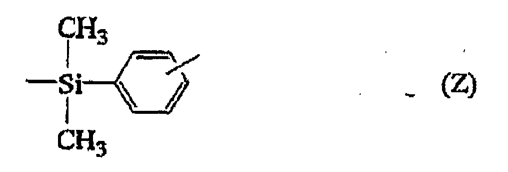 and R¹ is hydrogen or a substituted or unsubstituted monovalent hydrocarbon radical, X' is -CH₂-, -OCH₂-, -CH₂OCH₂-or -CO-NR¹-Y'- wherein Y' is -CH₂- or an o-, m- or p-dimethylsilylphenylene radical of the structural formula (Z'): 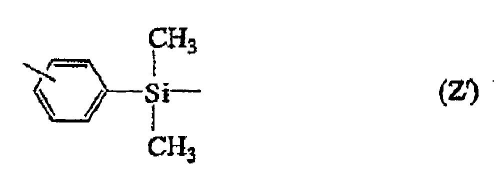 and R¹ and R are as defined above, Rf is a divalent perfluoropolyether radical, a is independently 0 or 1, and n is 2 or 3.

4. A composition of claim 3, wherein Rf is selected from structures of the general formulae (i) and (ii) 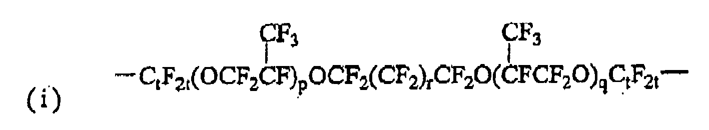 wherein p and q are each an integer of 1 to 150, p+q is 2 to 200, r is an integer of 0 to 6, and t is 2 or 3 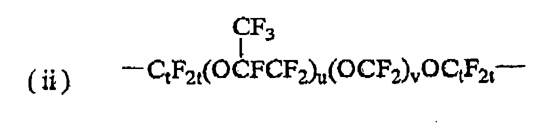 wherein u is an integer of 1 to 200, v is an integer of 1 to 50, and t is 2 or 3.

5. A composition of any one of the preceding claims wherein component (A) is a linear fluoropolyether compound of the general formula (2) 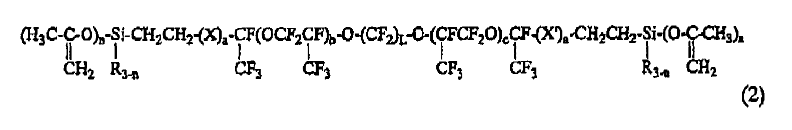 wherein X is -CH₂-, -CH_{2O}-, -CH₂OCH₂- or -Y-NR-CO- wherein Y is -CH₂- or an o-,m- or p-radical of the formula (Z) : 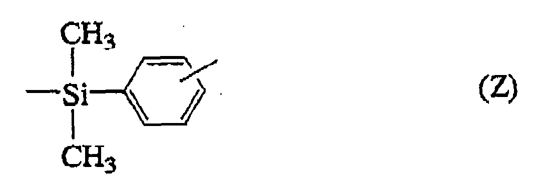 and R¹ is hydrogen, methyl, phenyl or allyl, X' is -CH₂-, -OCH₂-, -CH₂OCH₂- or -CO-NR¹-Y'- wherein Y' is -CH₂- or an o-,m-or p-radical of the structural formula (Z'): 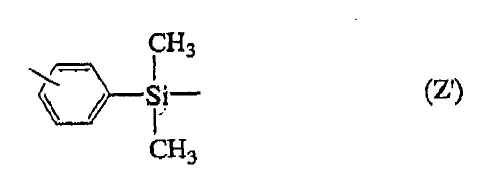 and R¹ and R are as defined above, a is independently 0 or 1, L is an integer of 2 to 6, b and c are independently an integer of 0 to 200 and n is 2 or 3.

6. A composition according to claim 5, wherein the linear fluoropolyether compound of formula (2) is selected from the following compounds

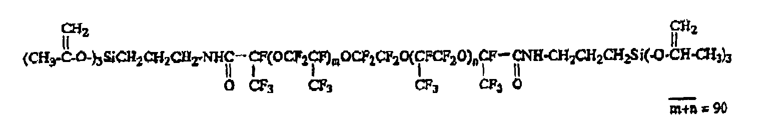

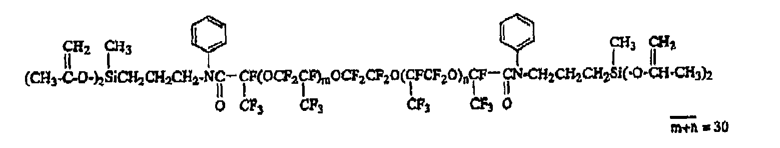

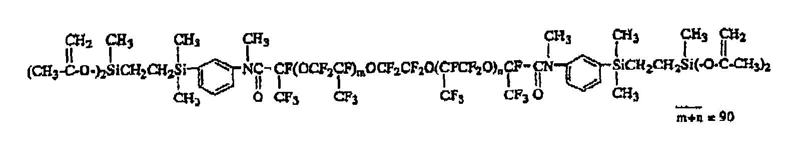

7. A composition of any one of the preceding claims in which the compounding ratio of (B) to (C) is between 0.1/1.0 and 1.0/0.1 and the amount of (B) and (C) combined is from 0.3 to 3.0 parts by weight per 100 parts by weight of (A).

8. A composition according to any one of the preceding claims, wherein component (B) is present in an amount of 0.1 to 5.0 parts by weight per 100 parts by weight of components (A).

9. A composition according to any one of the preceding claims, wherein component (C) is present in an amount of 0.1 to 5.0 parts by weight per 100 parts by weight of component (A).

10. A composition of any one of the preceding claims wherein component (D) is a curing catalyst selected from organic tin compounds, titanates, guanidyl-containing compounds and DBU derivatives.

11. A composition of claim 10 wherein component (D) is selected from dibutyltin derivatives such as dibutyltin dimethoxide, dibutyltin dioctoate and dibutyltin dilaurate, dioctyltin derivatives such as dioctyltin dilaurate; tetramethyl titanate, tetraisopropyl titanate, tetrabutyl titanate; tetramethylguanidine tetramethylguanidylpropyltrimethoxysilane; 1,5-diazabicyclo [5.4.0]undec-5-ene and 1,5-diazabicyclo[4.3.0]non-5-ene (DBN).

12. A composition of any one of the preceding claims, wherein component (D) is present in an amount of 0.01 to 1.0 parts by weight per 100 parts by weight of component (A).

13. Use of a composition of any one of claims 1 to 12 for sealing or coating.

14. Use according to claim 13 in which the composition is used for sealing or coating in contact with silicone rubber.

15. Rubber product or article sealed or coated with a cured composition according to any one of claims 1 to 12.

## Patentansprüche

1. Härtbare Fluorpolyether-Beschichtungszusammensetzung, umfassend:
(A) eine unverzweigte Fluorpolyether-Verbindung mit zumindest zwei Isopropenoxysilyl-Resten im Molekül und einer Perfluorpolyether-Struktur in der Hauptkette,
(B) ein kohlenstofffunktionelles Silan mit mit einem Aminorest, der aus γ-Aminopropyltrimethoxysilan, γ-Aminopropyltriethoxysilan, γ-Aminopropylmethyldimethoxysilan, γ-Ethylendiaminopropyltrimethoxysilan, γ-Ethylendiaminopropyltriethoxysilan und Ethylendiaminobenzylethyltrimethoxysilan ausgewählt ist,
(C) ein kohlenstofffunktionelles Silan mit einem Epoxyrest, der aus γ-Glycidoxypropyltrimethoxysilan, γ-Glycidoxypropyltriethoxysilan, γ-Glycidoxypropylmethyldimethoxysilan und β-(3,4-Epoxycyclohexyl)ethyltrimethoxysilan ausgewählt ist, und
(D) einen Härtungskatalysator.

2. Zusammensetzung nach Anspruch 1, worin Komponente (A) 2 bis 4 Isopropenoxysilyl-Reste im Molekül aufweist.

3. Zusammensetzung nach Anspruch 1, worin Komponente (A) eine unverzweigte Fluorpolyether-Verbindung der allgemeinen Formel (1) ist: 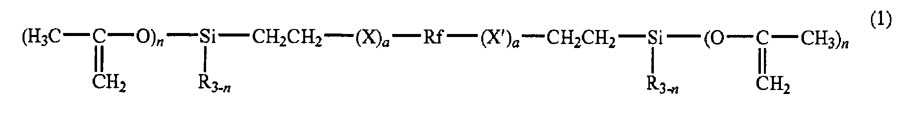 worin X = -CH₂-, -CH₂O-, -CH₂OCH₂- oder -Y-NR-CO- ist, worin Y = -CH₂- oder ein o-, m- oder p-Dimethylsilylphenylenrest der Strukturformel (Z) ist: 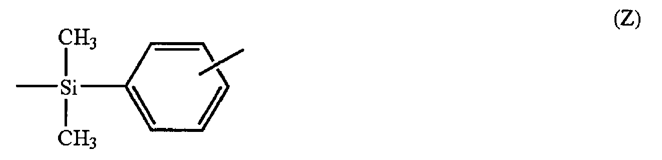 und R¹ Wasserstoff oder ein substituierter oder unsubstituierter einwertiger Kohlenwasserstoffrest ist, X' = -CH₂-, -OCH₂-, -CH₂OCH₂- oder -CO-NR¹-Y'- ist, worin Y' = -CH₂- oder ein o-, m- oder p-Dimethylsilylphenylenrest der Strukturformel (Z') ist: 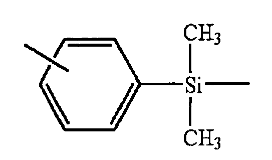 und R¹ und R der obigen Definition entsprechen, Rf ein zweiwertiger Perfluorpolyether-Rest ist, die a jeweils 0 oder 1 sind und n = 2 oder 3 ist.

4. Zusammensetzung nach Anspruch 3, worin Rf aus Strukturen der allgemeinen Formeln (i) und (ii) ausgewählt ist: 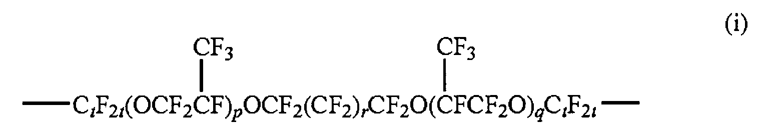 worin p und q jeweils eine ganze Zahl von 1 bis 150 sind, p+q = 2 bis 200 ist, r eine ganze Zahl von 0 bis 6 ist und t = 2 oder 3 ist, 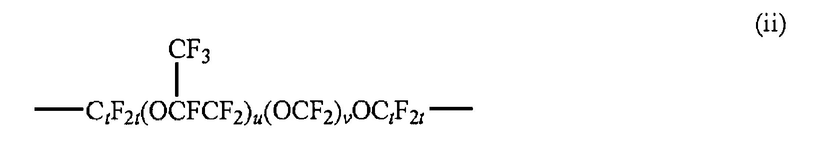 worin u eine ganze Zahl von 1 bis 200 ist, v eine ganze Zahl von 1 bis 50 ist und t = 2 oder 3 ist.

5. Zusammensetzung nach einem der vorangegangenen Ansprüche, worin Komponente (A) eine unverzweigte Fluorpolyether-Verbindung der allgemeinen Formel (2) ist: 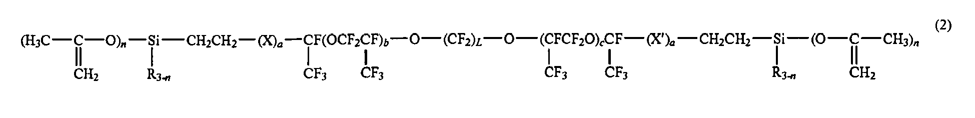 worin X = -CH₂-, -CH₂O-, -CH₂OCH₂- oder -Y-NR-CO- ist, worin Y = -CH₂- oder ein o-, m- oder p-Rest der Formel (Z) ist: 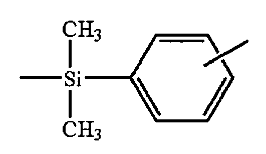 und R¹ Wasserstoff, Methyl, Phenyl oder Allyl ist, X' = -CH₂-, -OCH₂-, -CH₂OCH₂-oder -CO-NR¹-Y'- ist, worin Y' = -CH₂- oder ein o-, m- oder p-Rest der Strukturformel (Z') ist: 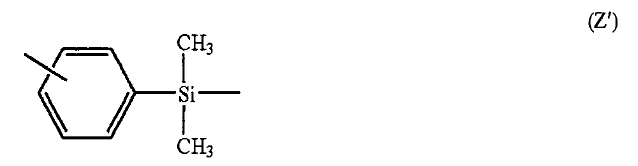 und R¹ und R der obigen Definition entsprechen, die a jeweils 0 oder 1 sind, L eine ganze Zahl von 2 bis 6 ist, b und c jeweils unabhängig voneinander eine ganze Zahl von 0 bis 200 sind und n = 2 oder 3 ist.

6. Zusammensetzung nach Anspruch 5, worin die unverzweigte Fluorpolyether-Verbindung der Formel (2) aus den nachstehenden Verbindungen ausgewählt ist:

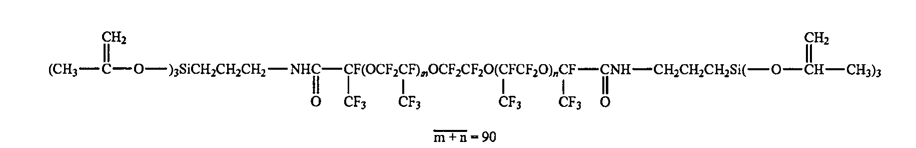

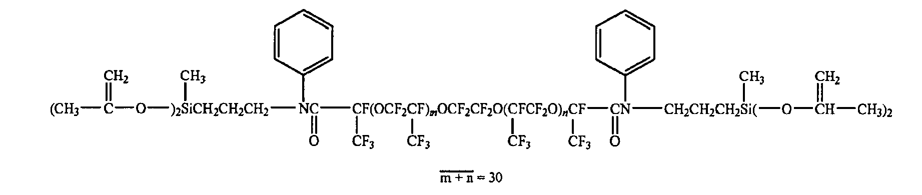

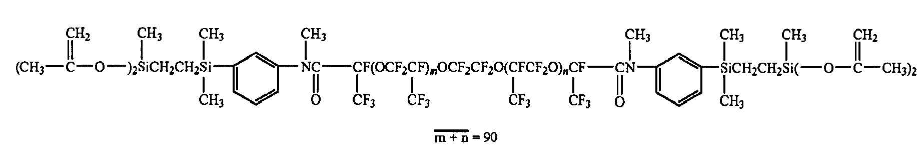

7. Zusammensetzung nach einem der vorangegangenen Ansprüche, worin das Mischungsverhältnis zwischen (B) und (C) zwischen 0,1:1,0 und 1.0:0,1 liegt und die Menge an (B) und (C) zusammen 0,3 bis 3,0 Gewichtsteile pro 100 Gewichtsteile (A) beträgt.

8. Zusammensetzung nach einem der vorangegangenen Ansprüche, worin Komponente (B) in einer Menge von 0,1 bis 5,0 Gewichtsteilen pro 100 Gewichtsteile von Komponente (A) enthalten ist.

9. Zusammensetzung nach einem der vorangegangenen Ansprüche, worin Komponente (C) in einer Menge von 0,1 bis 5,0 Gewichtsteilen pro 100 Gewichtsteile von Komponente (A) enthalten ist.

10. Zusammensetzung nach einem der vorangegangenen Ansprüche, worin Komponente (D) ein aus organischen Zinnverbindungen, Titanaten, guanidylhältigen Verbindungen und DBU-Derivaten ausgewählter Härtungskatalysator ist.

11. Zusammensetzung nach Anspruch 10, worin Komponente (D) aus Dibutylzinnderivaten, wie z.B. Dibutylzinndimethoxid, Dibutylzinndioctoat und Dibutylzinndilaurat, Dioctylzinnderivaten, wie z.B. Dioctylzinndilaurat, Tetramethyltitanat, Tetraisopropyltitanat, Tetrabutyltitanat, Tetramethylguanidin, Tetramethylguanidylpropyltrimethoxysilan, 1,5-Diazabicyclo[5.4.0]undec-5-en und 1,5-Diazabicyclo[4.3.0]non-5-en (DBN) ausgewählt ist.

12. Zusammensetzung nach einem der vorangegangenen Ansprüche, worin Komponente (D) in einer Menge von 0,01 bis 1,0 Gewichtsteilen pro 100 Gewichtsteile von Komponente (A) enthalten ist.

13. Verwendung einer Zusammensetzung nach einem der Ansprüche 1 bis 12 zum Versiegeln oder Beschichten.

14. Verwendung nach Anspruch 13, worin die Zusammensetzung zum Versiegeln oder Beschichten in Kontakt mit Silikonkautschuk verwendet wird.

15. Kautschukprodukt oder -gegenstand, der mit einer gehärteten Zusammensetzung nach einem der Ansprüche 1 bis 12 versiegelt oder beschichtet ist.

## Revendications

1. Composition de revêtement de fluoropolyéther durcissable comprenant
(A) un composé de fluoropolyéther linéaire ayant au moins deux radicaux d'isopropénoxysilyle dans la molécule et une structure de perfluoropolyéther dans le squelette,
(B) un silane carbone-fonctionnel ayant un radical amino, qui est sélectionné parmi γ-aminopropyltriméthoxysilane, γ-aminopropyltriéthoxysilane, γ-aminopropylméthyldiméthoxysilane, γ-éthylènediaminopropyltriméthoxysilane, γ-éthylènediaminopropyltriéthoxysilane et éthylènediaminobenzyléthyltriméthoxysilane
(C) un silane carbone-fonctionnel ayant un radical époxy, qui est sélectionné parmi:
γ-glycidoxypropyltriméthoxysilane,
γ-glycidoxypropyltriéthoxysilane,
γ-glycidoxypropylméthyldiméthoxysilane et
S-(3,4-époxycyclohexyl)éthyltriméthoxysilane et
(D) un catalyseur de durcissement.

2. Composition selon la revendication 1, dans laquelle le composant (A) possède 2 à 4 radicaux d'isopropénoxysilyle dans la molécule.

3. Composition selon la revendication 1, où le composant (A) est un composé de fluoropolyéther linéaire ayant la formule générale (1): 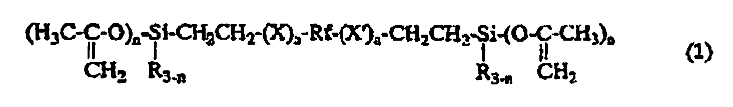 où X est -CH₂-, -CH₂O-, -CH₂OCH₂- ou -Y-NR-CO- où Y est -CH₂- ou un radical o-, m- ou p-diméthylsilylphénylène de la formule structurelle (Z): 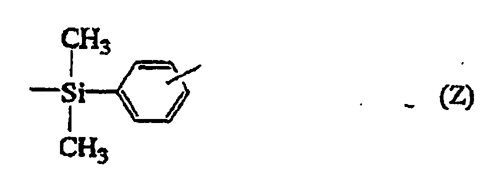 et R¹ est hydrogène ou un radical hydrocarbure monovalent substitué ou non substitué, X' est -CH₂-, -OCH₂-, -CH₂OCH₂- ou -CO-NR¹-Y'- où Y' est -CH₂- ou un radical o-, mou p- diméthylsilylphénylène de la formule structurelle (Z') : 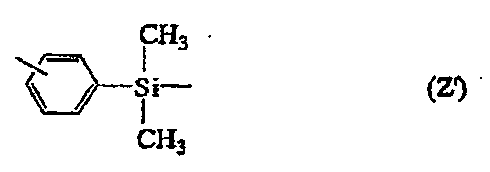 et R¹ et R sont comme définis ci-dessus, Rf est un radical de perfluoropolyéther divalent, a est indépendamment 0 ou 1, et n est 2 ou 3.

4. Composition selon la revendication 3, où Rf est sélectionné parmi les structures des formules générales (i) et (ii) 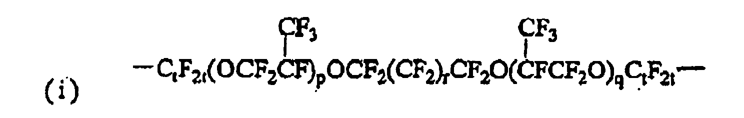 où p et q sont chacun un entier de 1 à 150, p+q est 2
à 200, r est un entier de 0 à 6, et t est 2 ou 3 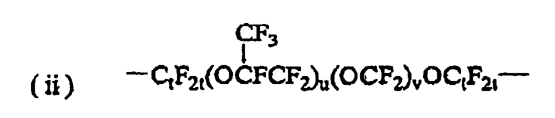 où u est un entier de 1 à 200, v est un entier de 1 à 50, et t est 2 ou 3.

5. Composition selon l'une quelconque des revendications précédentes, où le composant (A) est un composé de fluoropolyéther linéaire de la formule générale (2) 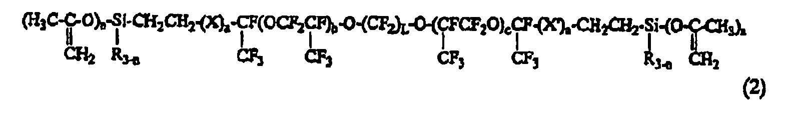 où X est -CH₂-, -CH₂O-, -CH₂OCH₂- ou -Y-NR-CO- où Y est -CH₂- ou un o-, m- ou p-radical de la formule (Z): 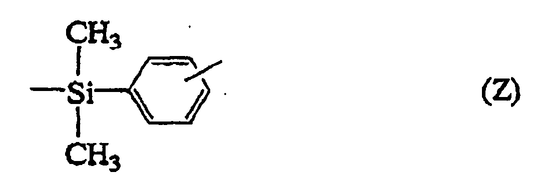 et R¹ est hydrogène, méthyle, phényle ou allyle, X' est -CH₂-, -OCH₂-, -CH₂OCH₂- ou -CO-NR¹-Y'- où Y' est -CH₂- ou un o-, m- ou p-radical de la formule structurelle (Z'): 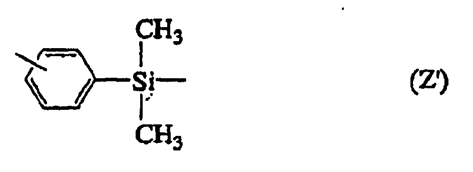 et R¹ et R sont comme définis ci-dessus, a est indépendamment 0 ou 1, L est un entier de 2 à 6, b et c sont indépendamment un entier de 0 à 200 et n est 2 ou 3.

6. Composition selon la revendication 5, dans laquelle le composé de fluoropolyéther linéaire de la formule (2) est sélectionné parmi les composés suivants

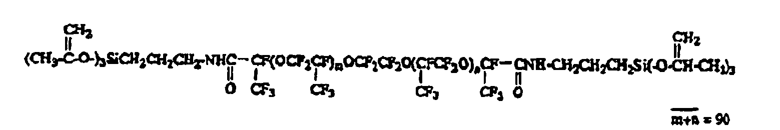

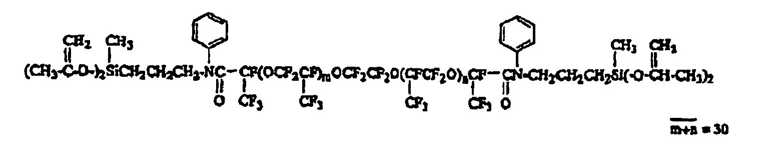

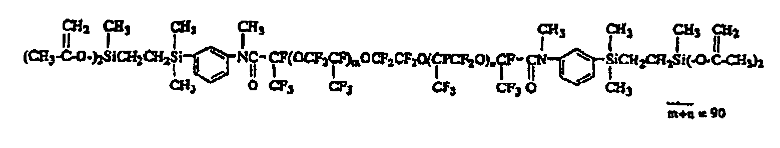

7. Composition selon l'une quelconque des revendications précédentes, dans laquelle le rapport de compoundage de (B) à (C) est entre 0,1/1,0 et 1,0/0,1, et la quantité de (B) et (C) combinée représente de 0,3 à 3,0 partie en poids pour 100 parties en poids de (A).

8. Composition selon l'une quelconque des revendications précédentes, dans laquelle le composant (B) est présent en une quantité de 0,1 à 5,0 partie en poids pour 100 parties en poids du composant (A).

9. Composition selon l'une quelconque des revendications précédentes, dans laquelle le composant (C) est présent en une quantité de 0,1 à 5,0 parties en poids pour 100 parties en poids du composant (A).

10. Composition selon l'une quelconque des revendications précédentes, dans laquelle le composant (D) est un catalyseur de durcissement sélectionné parmi des composés d'étain organique, titanates, composés contenant du guanidyle et dérivés de DBU.

11. Composition selon la revendication 10, dans laquelle le composant (D) est sélectionné parmi des dérivés de dibutyl-étain comme le diméthoxyde de dibutyl-étain, le dioctoate de dibutyl-étain et le dilaurate de dibutyl-étain, des dérivés de dioctyl-étain comme le dilaurate de dioctyl-étain; le titanate de tétraméthyle, le titanate de tétraisopropyle, le titanate de tétrabutyle;
tétraméthylguanidine tétraméthylguanidylpropyltriméthoxy-silane; 1,5-diazabicyclo[5.4.0]undec-5-ène et 1,5-diazabicyclo[4.3.0]non-5-ène (DBN).

12. Composition selon l'une quelconque des revendications précédentes, dans laquelle le composant (D) est présent en une quantité de 0,01 à 1,0 partie en poids pour 100 parties en poids du composant (A).

13. Utilisation d'une composition selon l'une quelconque des revendications 1 à 12 pour le scellement ou le revêtement.

14. Utilisation selon la revendication 13, dans laquelle la composition est utilisée pour le scellement ou le revêtement en contact avec du caoutchouc silicone.

15. Produit ou article en caoutchouc scellé ou revêtu d'une composition durcie selon l'une quelconque des revendications 1 à 12.
